# EUROPEAN PATENT APPLICATION

(11) **EP 1 544 017 A2**
(43) Date of publication of application: **22.06.2005**
(21) Application number: 04029301.1
(22) Date of filing: 10.12.2004
(51) Int. Cl.: B60J 10/04

(54) **Lip seal**

(30) Priority: 19.12.2003 US 741893
(71) Applicant: Dura Global Technologies, Inc., Rochester Hills, Michigan 48309 (US)
(72) Inventor: Barnett, Danny Wayne, Lawrenceburg, Tennessee 38464 (US); Dufour, William Thomas, Michigan 48316 (US); Longstreet, Greg Thomas, Michigan 48843 (US); Casimir, Kiczeck, Michigan 48152 (US)
(74) Representative: Sties, Jochen, Dipl.-Ing.

(57) **Abstract**

A seal for the closure of a gap formed between a support member and adjacent second member. The seal has a polymeric body forming a sealing segment and a base segment. The seal segment has a sealing lip that extends into the gap to slidingly engage the second member. The base segment has a free distal end with one of a compressible portion and an articulating joint. Additionally, a channel is formed in the support member. The channel has a cavity and an opening in communication with the cavity. The cavity width is larger than the opening width so that the one of the compressible portion and the articulating joint portion is collapsible to a first width less than the opening width to permit insertions of the free distal end past the opening and into the cavity and being expandable in the cavity to a second width greater this first width to inhibit removal of the distal end from the cavity.

## Description

### CROSS REFERENCE TO RELATED APPLICATIONS

Not Applicable.

### STATEMENT REGARDING FEDERALLY SPONSORED RESEARCH

Not Applicable

### REFERENCE TO MICROFISHE APPENDIX

Not Applicable

### FIELD OF THE INVENTION

The present invention generally relates to a seal for an access cover member and, more particularly, to a flexible lip seal suitable for sealing a gap between a support member and an access cover member.

### BACKGROUND AND SUMMARY OF THE INVENTION

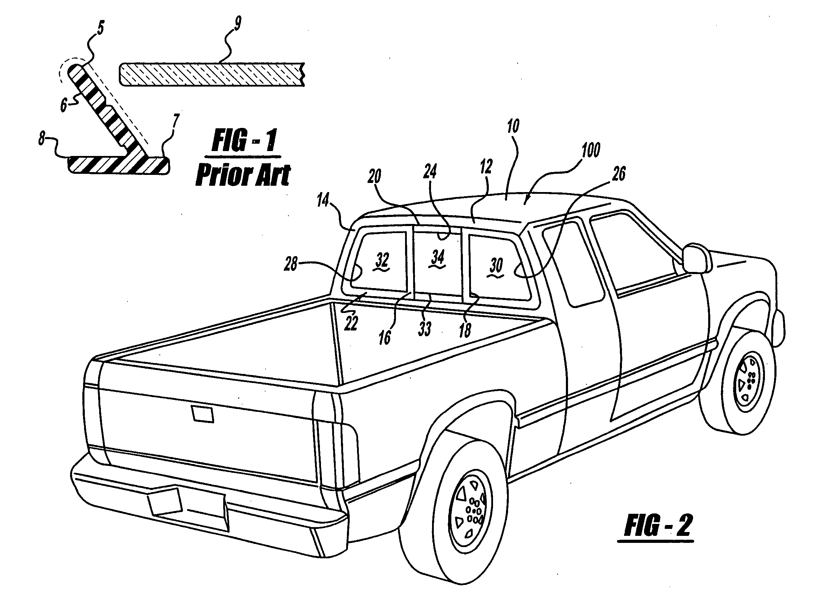

Lip seals are well known and are used to provide a seal between two adjacent surfaces, such as to seal a gap between a sliding pane and a member of a window assembly such as a frame such as shown in FIG. 1. Typically, the lip seal or blade seal 7 has a sealing surface 5 provided by a sealing segment 6, which extends at an angle from the top wall of a base segment 8. The base segment is adapted to be attached to a window frame or the like. Lip seals are also used in numerous other sealing applications, such as between a housing with an aperture and an encapsulating lid or access cover 9 to enclose an aperture. For example, water pumps, shaft seals, valve covers, cam covers, housings, etc. Lip seals typically have a simple cross-sectional configuration, since they are produced preferably by extrusion or other molding techniques adapted for the mass production of the seals.

The seal in a window assembly must perform several critical functions. Not only must it seal out weather, that is, precipitation and wind; it must also provide an effective reduction in wind noise. Further, the seal must perform these functions typically over an extended time period and often under harsh environmental conditions. In window assemblies intended for automotive vehicle body applications, for example, as in the rear window assembly in a pickup truck or sometimes referred to as a "backlite" and the like, the seal will be exposed to both hot and cold temperature extremes, often cycling quickly from one to the other.

In a typical automotive sliding window assembly application, a first lip seal may be used along a vertical edge of the window opening fitted with a sliding pane, and additional lip seals may be used along the upper and lower horizontal edges of the window opening. Yet another lip seal may be used at the opposite vertical edge. At the four comers of the window opening, the individual lip seals must cooperate to form an effective weather and noise seal. The seal is typically secured to the frame by adhesives with or without a locating groove. Finally, the lip seal must be fairly compliant to seal the gap between the frame and the sliding pane and thus it is normally not very rigid which leads to handling problems during the assembly of the seal to the frame.

Numerous attempts have been made to overcome some of these difficulties such as shown in US Patent Nos. 5,551,193 and 5,799,449 both owned by the assignee of the present application and incorporated herein by reference in their entirety. None of these designs provides a solution to all the concerns discussed above.

Thus, there is a need for more effective lip seals, providing better and more durable performance, especially in window assemblies equipped with sliding panes. There is also a need for more effective noise and weather sealing at the comers of a window opening, where one lip seal cooperates with another lip seal or other sealing member to form a continuous seal about the periphery of the window opening. And there is also a need to positively lock-in the seal in the frame as well as creating a seal that reduces handling problems during the assembly process of the seal to the window. Finally, there is also a need to provide a lip seal that is positively locked between a fixed member and a removable access cover in non-window applications.

According to the present invention, a seal for closure of a gap includes, in combination, a body having a seal segment and a base segment. The seal segment has an exposed sealing surface. The base segment has a free distal end including a compressible segment. A support member engages the free distal end. The support member has a portion forming a channel including an opening. The opening has an opening width and a cavity in communication with the opening. The cavity has a cavity width, a bottom portion, a top portion adjacent the opening and a pair of walls between the top portion and the bottom portion. The cavity width is larger than the opening width. Additionally, the compressible segment is compressible to a width less than the opening width to permit insertion of the free distal end into the cavity and after insertion, the free distal end is expandable in the cavity to contact a portion of the surface of the cavity to inhibit the removal of the distal end from the cavity.

In another aspect of the invention, a method of sealing a gap between a support member and a second member with a seal comprises providing a body formed of a polymeric material. The body includes a seal segment and a base segment. The seal segment forms a sealing surface to seal against the second member. The base segment extends in a direction away from the seal segment and is attachable to the support member. The base segment has a free distal end including a collapsible segment. The collapsible segment has an uncompressed width and a compressed width. Also, providing the support member with a portion forming a channel including a cavity and an opening in communication with the cavity. The opening has an opening width. The cavity has a cavity width. The opening width is smaller than the cavity width. Then, squeezing the compressible segment to a compressed width that is smaller than the opening width. Additionally, inserting the compressed width of the collapsible segment past the opening into the cavity. The cavity has a top end, a bottom end and a pair of walls connecting the top end with the bottom end. The compressible segment expanding in the cavity so that a portion of the uncompressed width engages a portion of the surface of the cavity to inhibit removal of the distal end from the cavity.

Those who are skilled in the art will recognize from the foregoing disclosure and from the following discussion of certain preferred embodiments that the novel seal and window assemblies in which they are used represent a significant advance in this area of technology. Improved sealing performance can be obtained, including both noise and weather sealing. Also, handling of the seal is enhanced.

### BRIEF DESCRIPTION OF THE DRAWINGS

Certain preferred embodiments will be discussed below in detail with reference to the appended drawings wherein:

FIG. 1 referred to in the Background discussion, illustrates the cross-sectional configuration of a known lip seal:

FIG. 2 generally illustrates one embodiment of a sliding window or a backlight with the seal of the invention in a pickup truck;

FIG. 3 is a schematic elevational view of one embodiment of the window assembly with a sliding panel between right-hand and left-hand fixed panes.

FIG. 4 is an enlarged cross-sectional view taken through line 4-4 of FIG. 3 showing a lip seal vertically mounted in a slot within a vertical post of the sliding window assembly;

FIG. 5A is an enlarged view of the lip seal of FIGS. 2- 4 taken out of the window assembly, and FIG. 5B is an enlarged view of the lip seal of FIG. 5A illustrating the insertion of the lip seal into a cavity;

FIG. 6 is a perspective view of the lip seal of FIGS. 2-4 not in assembly;

FIG. 7 is a partial cross-sectional perspective view of the lip seal according to the invention in accordance with FIGS. 2-4, and FIGS. 5A and 5B mounted along a horizontal peripheral edge of a window opening in surface-to-surface abutting contact with an end wall and a vertical peripheral edge in surface-to-surface abutting contact with an end wall;

FIG. 8A is an enlarged sectional view of an alternate embodiment of the lip seat in a cavity, and FIG 8B is an enlarged sectional view of FIG. 8A prior to the insertion of the lip seal into a cavity;

FIG. 9A is an enlarged sectional view of another alternate embodiment of the lip seal view of FIG. 9A seal being inserted into a cavity, and FIG. 9B is an enlarged sectional view of FIG 9A illustrating the lip.

FIG 10A is an enlarged cross-sectional view of still yet another alternate embodiment of the lip seal in a cavity according to the invention, and FIG. 10B is an enlarged sectional view of FIG 10A illustrating the lip seal being inserted into a cavity;

FIGS. 11A, 11B, 11c, 11D, 11E, and 11F are partial cross-sectional views of still other alternate embodiments of the lip seal and cavity in accordance with the present invention; and

FIG. 12 is still yet another embodiment of the lip seal and cavity of the present invention in a non-window application.

The figures referred to above are not drawn necessarily to scale and should be understood to present a simplified representation of the invention, illustrative of the basic principles involved. The novel lip seals according to the present invention will have configurations and components determined, in part, by the intended application and use environment. Some features of the assemblies incorporating the novel lip seals as depicted in the accompanying figures have been enlarged or distorted relative to others to facilitate visualization and understanding. In particular, thin features may be thickened and long features may be shortened. References to direction and position, unless otherwise indicated, refer to the orientation of the lip seal and the assemblies illustrated in the drawings. It should be understood that blade or lip seal of the invention can be adapted for use in any orientation, for other motor vehicle sealing applications and architectural sealing applications in addition to motor vehicle applications.

### DESCRIPTION OF THE PREFERRED EMBODIMENTS

The novel lips seals disclosed herein and the assemblies employing one or more such lip seals will be recognized by those skilled in the art to be suitable for numerous different applications. As indicated previously, the lip seals are particularly well suited for closing a gap or space between a sliding pane and an adjacent fixed window assembly member. Window assemblies employing such lip seals are particularly well suited for use in motor vehicle glazing applications, for example, as rear window or backlites in the passenger compartment of pickup truck. For convenience of illustration, the appended drawings illustrate various lip seal configurations for a window assembly having design features suitable for use as a pickup truck rear window as well as a lip seal for use between a housing with an aperture and an encapsulating cover in an engine. Nevertheless, those skilled in this area of technology will recognize that the principles of the invention here disclosed and described are applicable to other applications, including architectural applications, and other automotive applications, etc.

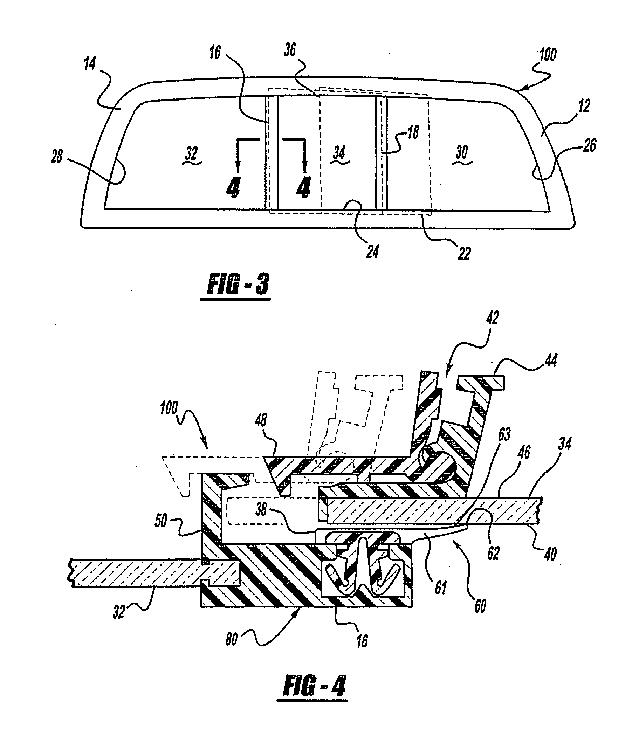

The window panel with lip seal assembly according to the present invention is designated by the numeral 100 and is used to seal a gap 79 with a seal 60 between a first support member 20 and a second member 33 as shown in FIGS 2-4. In the illustrated embodiment, the window assembly 100 includes a frame 12, which includes a complete outer circumferential portion 14 and two intermediate vertical members 16 and 18. Members 16 and 18, together with upper horizontal or support section 20 and lower horizontal or support section 22, define a centrally located window opening 24. Frame 12 can be formed in accordance with manufacturing techniques well known to those skilled in the art, including injection molding of thermoplastic materials such a polyvinyl chloride (PVC), reaction injection molding of polyurethane material, polyethylene terapathalate (PET) or similar materials. In addition, fasteners, glass mounting fixtures and other components well known to those skilled in the art may be included in the frame in accordance with known techniques and designs. Right-hand window opening 26 is closed by fixed plane 30. Similarly, left-hand window opening 28 is closed by fixed pane 32. Center window opening 24 is closed by a sliding pane 34, which slides to the right from a closed position to an open position. Sliding pane 34 is seen in phantom in FIG. 3 in partially opened position, such that the leading edge 36 of sliding pane 34 is spaced to the right from vertical frame member 16. To close center pane 34, it is moved to the left until leading edge 36 overlies vertical frame member 16. It will be understood that the fixed and sliding panes of the window assembly may be formed of any suitable material, including glass, plastic, etc. The support member 20 includes a rear window assembly 22 in a window opening 24 defined in a rear panel 26 of a utility vehicle cab 10.

Although FIGS. 2 and 3 generally illustrate a single moving panel 34 and a pair of spaced fixed window panels, this invention may be applied to multiple moving panels configured to seal one or more openings in a window panel assembly. The illustration of the window panel with lip seal assembly 60 as a backlight for a pickup truck, constitutes a first application of the invention. It is contemplated that this concept can be extended to include sealing both fixed and moving panels, such as, side lights, sunroofs, other panel assemblies in non-automotive applications, and sealing removable encapsulation covers in both automotive and non-automotive applications.

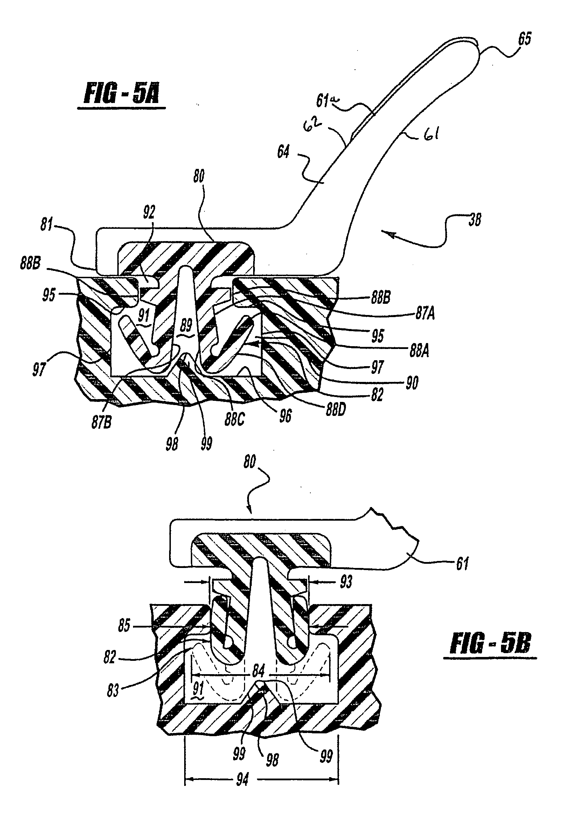

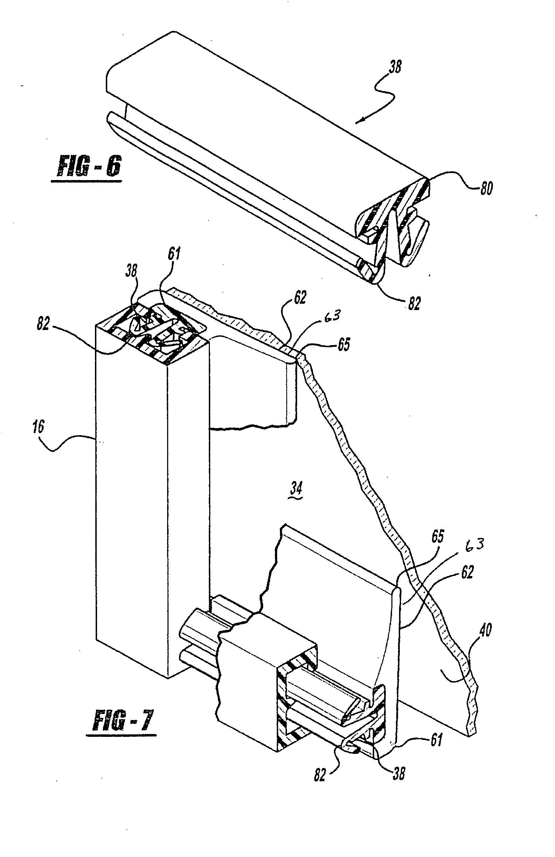

Referring now specifically to FIG. 4 the window assembly 100 is seen to include seal 60 which comprises a blade or lip seal 38, shown in greater detail in FIGS. 5A, 5B and 6, which are vertically mounted to frame member 16. Lip seal 38 forms a weather and noise seal between vertical post 16 and sliding pane 34, when pane 34 is in its closed position. More specifically, lip seal 38 fills the gap between post 16 and outside surface 40 of pane 34. Pane 34 is seen to be latched or locked in its closed position by latch mechanism 42 comprising fixed latch member 44 adhered to the inside surface 46 of sliding pane 34, and moveable latch member 48 which is biased into locking position ( counterclockwise, or the left as viewed in FIG. 3) over outer face 50 of vertical frame member 16.

As best seen in FIG. 6, the lip seal 38 is informed as an elongate or unitary body and has a base segment 80 and a sealing lip (not shown). As shown in FIG. 7, sealing lip 61 extends laterally in a canterlevered manner from base segment 80. Due to its uniform cross-sectional configuration, the unitary body can be extruded or co extruded in accordance with known techniques, to achieve advantageous cost efficiency in its manufacture. It is important, however, that sealing lip 61 be sufficiently resilient and flexible in order to achieve surface-to-surface sealing contact with the outside surface 40 of sliding pane 34. Base segment 80 in one illustrated embodiment is formed of one hardness material and sealing lip 61 is preferably formed of another hardness material. Sealing lip 61 is preferably more flexible than the base segment to promote surface to surface sealing contact of lip portion 62 with the outside surface 40 of sliding pane 34. Alternatively and optionally, to reduce sliding friction of sealing lip against surface 40 when sliding pane 34 is moved, a flock material 61 well known in the art, is attached to the sealing surface 62 (shown in FIG. 7B). Alternatively further optionally lip portion or, sealing surface 62 is coated with a layer 63 of low-friction material such as poly-coat well known in the art as shown in FIG. 7.

Optionally, portions of frame 12 spanning the opening may be concealed by a decorative appliqué or sheet of glass. Preferably, each piece of trim is configured to span the opening. Each appliqué or glass trim piece preferably has a length substantially equal to the width of the window opening, preferably a width substantially equal to the inside edge of the frit band to the peripheral edge of the glass, and preferably a thickness substantially equal to fixed glass panels 30, 32, respectively or sliding panel 34 including the frit layer. Each appliqué or glass trim is preferably attached to the surface of frame 12 engaging the surface of each panel 30, 32, 34 respectively either by an adhesive, or by some temporary fastener such as known snap assembly or the like. Alternatively, each decorative appliqué or trim spanning the opening could be molded simultaneously with the formation of the frame member and would not require a separate attachment step.

As shown in FIGS 4, 5A, and 7, lip seal 38 is configured to provide a weather-tight seal about window opening 34 to seal gap 79 between frame 12 and vertical members 16, 18 and sliding panel member 34. Lip seal 38 is inserted into a continuous groove or channel 90 that is formed in frame members 12, 16, 18, and adjacent to the edge of opening 24.

As shown in FIGS. 5A and 5B, channel 90 has a cross-sectional shape with a cavity 91 and an opening 92. Opening 92 is formed with an opening width 93. Cavity 91 has a cavity width 94, top surface 95, bottom surface 96 and a pair of spaced apart walls 97 extending between top surface 95 and bottom surface 96. Opening width 93 is smaller than cavity width 94. The top surface 95 and bottom surface 96 are spaced apart and with the spaced apart pair of walls 97 extending there between to form a cross-sectional shape that is substantially a rectangle. Those skilled in the art will recognize that the cross-sectional shape can take on many forms including but not limited to a square parallelogram, or a truncated base of a triangle, or any other suitable shape to practice the invention. Additionally, the cross-sectional shape may have it's comers radiused to facilitate its manufacture. Optionally, the bottom surface 96 may include a projection 99 with an apex 98 that is oriented toward top surface 95 for a purpose to be discussed later on.

Lip seal 38 has a seal 61 with a body 64, as shown in FIGS. 5A and 5B. Body 64 has an arcuate lip portion 65 that extends laterally and axially from an end of base segment 80. Lip portion 65 can have many different shapes and forms depending on the gap to be sealed, the application restraints and required sealing performance of the specific application and a plurality of lips. Lip portion 65 includes sealing surface 62 that engages the outer surface of the sliding pane 40 to seal gap 79. As stated earlier, body 64 is preferably made of a soft, relatively flexible material with first durometer; and base segment 80 is preferably made of a relatively rigid material with a second durometer, that is higher, less flexible material than the first durometer. It is contemplated that seal 61 may be co-extended in a single piece from a thermoset and optionally a thermoplastic elastomer (TPE) with plurality of different hardness portions. Such thermoplastic polymeric materials are available from Advanced Elastomer Corp. Optionally, two different harness thermoplastic vulcanizate (TPV), or two different harness thermoplastic olefin (TPO), which are all well known in the art, can be used to form seal 61. It is also contemplated that seal 61 may be formed by molding from other materials, such as thermosplastics, such as PVC, such as plastomers and thermoset elastomers such as, EPDM, Nitrile, Silicone, Butyl and the like onto a base segment 80 which is formed of relatively harder or rigid material, and by other forming techniques including extrusion and the like.

Base segment 80 includes cap portion 81 and free distal end 82. Free distal end 82 may take on many shapes, as will be discussed later on. The distal end 82 has a compressible cross-sectional shape 83 with a pair of projections that in its uncompressed condition has an uncompressed width 84 that is larger than opening width 93 of channel 90 (as best shown in FIG. 5A) and when compressed (as best shown in FIG. 5B), the distal end has a compressed width 85 that is smaller than the opening width 93 to permit the distal end 82 to be inserted through opening 92 and into cavity 91. After distal end 82 has been inserted into cavity 91, each projection of distal end 82 expands in cavity 91 so that distal end 82 is captured in cavity 91. By way of non-limiting example, the compressed width 85 of distal end 82 may be at least 1% to 10% smaller or more than opening width 93. Further optionally, the compressed width 85 may be 0.05 to 1.0 mm smaller (or more) than opening width 93. Optionally, if lip seal 38 is formed by extrusion, the body is co-extruded with base segment 80 to form one continuous body or strip 86. The continuous strip can be spliced into four separate segments. The segments are bonded together to form a frame, by using well-known conventional adhesives to attach the segments together or injection molding or a hot knife blade to form the frame As stated earlier, seal 38 may be also co-injection molded using two suitable polymeric materials, of different hardness to form a one piece seal, with the harder polymeric material forming the base segment and other softer polymeric material forming the lip seal. Because base segment 80 is preferably made of relatively harder thermoset, thermoplastic or plastomer material, a relatively rigid frame is formed. The sealing lip 61 is thus supported by the rigid frame and the rigid frame aids in the assembly process of the seal to the window assembly by preventing twisting and misalignment of the sealing segment prior to installation into channel 90. Still further optionally, retention of distal end 82 in channel 90 may be enhanced by utilizing an adhesive to bond a portion of distal end 82 in cavity 91. Exemplary one part adhesives include urethane adhesives, moisture-activated urethanes, moisture-activated silicones, thermally-activated modified epoxy, chemically-activated acrylate, and thermally-activated nitrile phenolic adhesives. Further optionally, a two-part adhesive may be used in bonding a portion of distal end 82 in cavity 91. As is well known in the art, two part adhesives are applied in two steps. One part is applied to distal end 82 and the other part of the adhesive applied to the surface of cavity 91. When the one part and the other part come into contact with each other, at the interface they react to form a bond to secure the distal end in the cavity. Additional suitable adhesives will become readily apparent to those skilled in the art, given the benefit of the disclosure.

Free distal end 82 includes an articulated joint which includes a pair of winged shaped portions 87A and 87B with a void portion 89 therebetween. Portion 87A is a mirror image of portion 87B. Portion 87A has a first extending portion 88A and portion 87B have a second extending portion 88B. When first portion 88A and second portion 88B are inserted into cavity 91, portion 88A and portion 88B act to center distal end 82 in opening 92 (as best shown in FIGS. 5A and 5B). Second extending portion 88B forms a J-shaped section that extends axially and laterally in cavity 91 toward the bottom surface 96. Second portion 88B has a hinge in the form of a notch to connect one section 88C to another section 88D. The notch permits section 88D to articulate toward and away from section 88C. In a compressed state, section 88D, is moved toward section 88C. In an uncompressed state, section 88D moves toward one of the pair of walls after distal end 82 is inserted into cavity 91 and section 88D moves about the hinge from its compressed condition. Optionally, cavity 91 has a bottom surface 96 with a projection 99 and an apex 98 that is oriented toward opening 92. Projection 99 functions to move one end of portion 87A away from one end portion 87B and to expand the void portion 89 in cavity 91. The insertion of seal 38 into cavity 91 continues until cap portion 81 is adjacent to the top of one of the frame members 12, 16, 18, respectively. As distal end 82 is inserted into cavity 91 and end 82 moves from a compressed condition in order to permit entry of end 82 into opening 92, toward an uncompressed state in cavity, end 82 produces an audible snap noise or alternately a tactile feel as it expands. After distal end 82 is disposed in cavity 91 as described above, and if lip seal 38 is urged out of cavity 91 second portion 88D contacts top surface 95 and articulates about the hinge toward one of the walls 97. As this occurs, the resistance to extract seal 38 out of cavity 91 increases as portion 88D frictionally contacts top surface 95 and one the walls 97. Thus base segment resists movement of lip seal 38 out of cavity and tends to retain seal 38 in cavity 91.

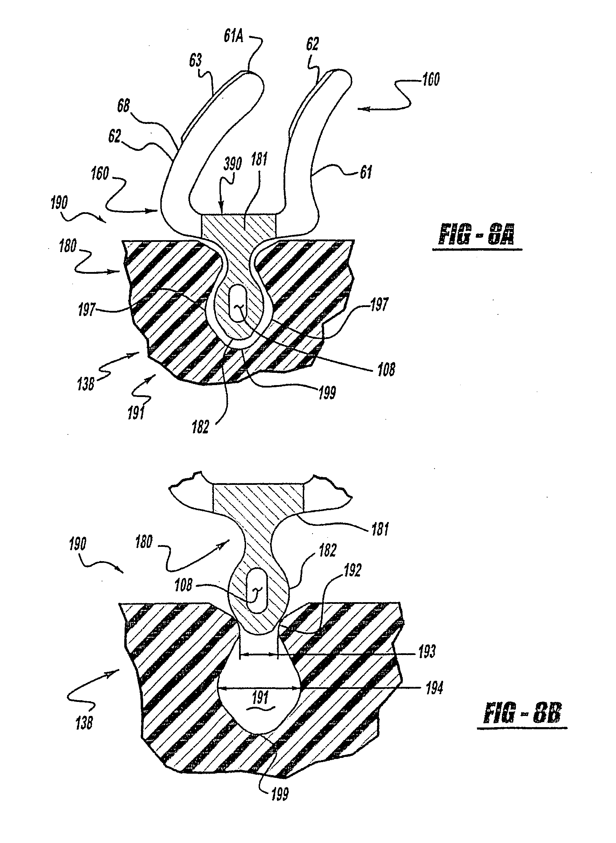

Another embodiment of the lip seal is designated by the numeral 138 and is shown in FIG. 8A and 8B. Where the elements are the same as in the first embodiment, the elements are designated with the same numeral. In this embodiment, lip seal 138 has a cap portion, seal portion 160 and a base segment 180. Seal portion 160 includes sealing lip 61, which has a sealing surface 62 that extends laterally from one end of base segment 180 and optionally a second seal lip 61A. Lip 61 and 61A each have a sealing surface 62 that extends laterally from base segment 180. The second seal lip 61A is maybe the same as sealing lip 61 optionally has low friction rubbing characteristics, such as silicone or thermoplastic with delron or similar material. Alternately the low friction coating may be post-applied and include silicone flocking and teflon. Alternatively lip 61A and 61 have a layer of flock material or the sealing surface 62 to slide against outside surface 40 of sliding pane 34. Further alternatively, sealing lip 61A has a layer of polycoat 63 formed on sealing surface 62 to slide or rub against outside surface 40. Base segment 180 has a cap portion 181 and distal end or projection 182. Projection 182 is illustrated as a tear drop shape with an internal cavity 189. Cavity 189 is vented to permit projection 182 to collapse on itself when compressed. In its uncompressed or expanded condition, projection 182 has a tear drop shape. Distal end is inserted into channel 190 which has a similar tear drop shaped cavity 191. Cavity 191 has an opening 192 with an opening width 193 that is smaller than the uncompressed width of projection 182. Cavity width 194 is larger than the uncompressed width of projection 182. Cavity width 194 has a pair of walls 197 that extend from opening 192 to nadir 199. To insert base segment 180 into cavity 191, projection 182 is collapsed to permit projection 182 to pass through opening width 193 until lip portion 181 is adjacent to channel 190. Once distal end is past opening 192, projection 182 seeks to return to its uncompressed condition. Optionally an audible snap or a tactile feel is experienced by the installer when inserted. In its uncompressed condition, projection 182 resists movement of lip seal 138 out of cavity 191 by frictional forces that develop between projection 182 and walls 197. In all other aspects, lip seal 138 operates as the lip seal described in the first embodiment.

Thus, the invention contemplates the use of two general seal retention schemes. One scheme is generally designated as an articulated joint type, shown in FIGS. 4, 5A, 5B, 6, 7, 9A, 9, 10A and 10B and the other scheme is generally designated as compressible / expansible type shown in FIGS. 8A, 8B, 11A thru 11E and 12.

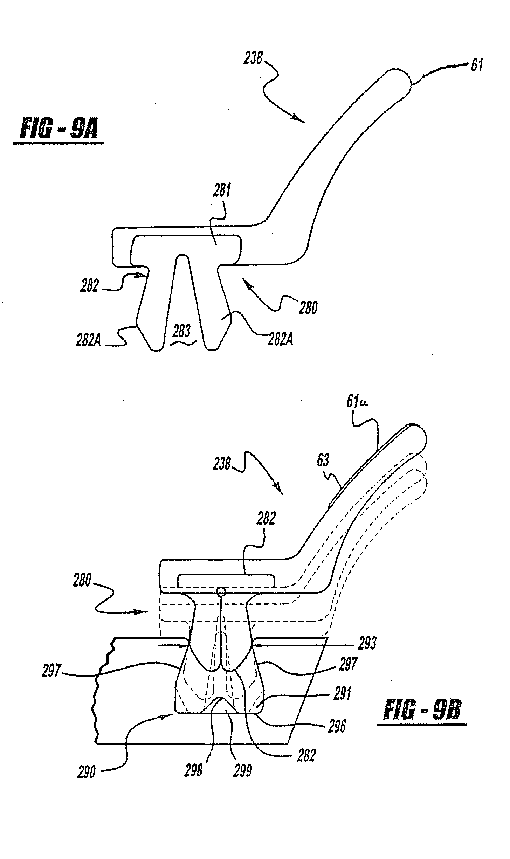

Another embodiment of the articulated joint type seal retention scheme is illustrated in lip seal 238 as shown in FIGS. 9A and 9B. Lip seal 238 has a base segment 280 with distal end 282 and sealing lip 61. Distal end 282 has a pair of adjacent but spaced apart arcuate winged shapes 282A with a void 283 formed between each of the pair of shapes 282A. A radius is formed between the pair of arcuate winged shapes 282A near the cap portion to form void portion 283. In their uncompressed condition, winged shapes 282 extend axially from the cap portion 281 and are normally biased radially apart from each other. The width of distal end 282 with the pair of uncompressed winged shapes 282A is greater than the opening width of channel 290. When the two winged shapes are compressed toward each other, the winged shapes are adjacent to each other so that the width of the two compressed winged shapes is less than the opening width 293 to permit insertion of distal end 282 into cavity 291 . Upon insertion of the distal end into cavity 291, winged shapes 282A, because of their shape and the properties of the material, move radially apart from each other to form a void 289 between winged shapes 282 A toward a spaced apart condition in order to inhibit or prevent removal of distal end 282 from cavity 291. As distal end 282 with winged shapes 282A moves past opening width 293 and moves into cavity 291 each end moves toward its uncompressed condition and each of the wings shapes 282A move to radially apart condition in the cavity. Optionally, bottom portion 296 has a peak or apex 298 to assist moving the arcuate shapes apart when each distal end 282 is inserted into cavity 291. Thus when each pair of shapes 282A is inserted into cavity 291, each moves winged shape laterally in cavity 291 to optionally produce are audible snap or a tactile feel of an expansion. To the operator installing the seal. Once the seal is in cavity 291, each shape 282A resists removal from cavity 291 by rubbing against walls 297. This rubbing creates a frictional force, which resists forces acting on the lip seal acting to remove distal end out of a cavity 291. In all aspects seal 238 functions as in the first embodiment.

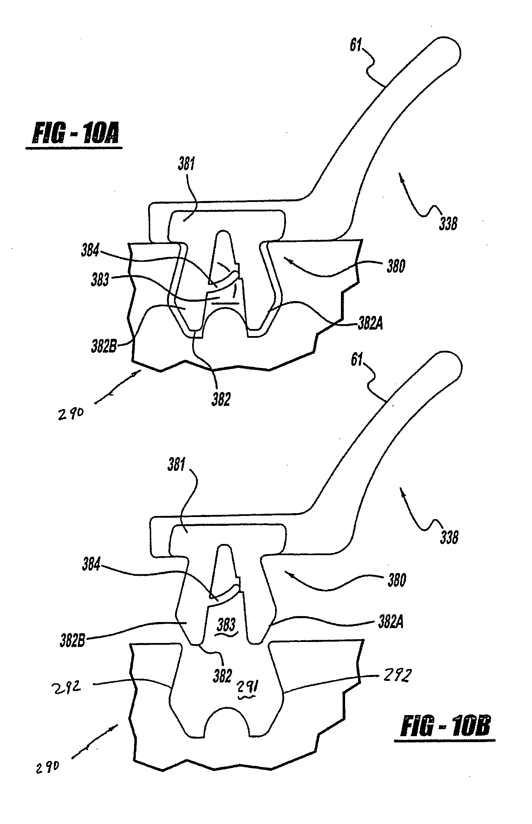

FIGS. 10A and 10B illustrate still another embodiment of the articulated type retention for the lip seal, which is designated by the numeral 338. Lip seal 338 has a sealing lip 61 and a base segment 380 with a cap portion 381. The base segment 380 has a distal end 382 from the cap portion. Distal end 382 has a first but spaced apart arcuate winged shape 382A and a second winged shape 382B with a void 383 between the respective shapes 382A and 382B. A radius is formed in cap 381 between shapes 382A and 382B. Winged shapes are similar to shapes 282A and 382B except that one shape 382A has a hinged portion 384, which extends toward void 383 and the other shape 382B has at least two steps formed on the side forming void 383. The distal ends 382A and 382B respectively are inserted into channel 290. Channel 296 has a bottom surface 296 and projection 299. Projection 299 has an apex 298 to promote the movement of one winged portion 382A away from the winged shape 382B. When one of the ends of portion 382A or 382B contacts projection 299, one end is moved away from the other end by apex 290 so that void portion 389 expands laterally in cavity 291 and optionally produces an audible snap fit or a tactile feel. As this occurs, the hinged portion 384 moves along steps 388 until the hinged portion engages one of the steps 388, this assures positive separation of portion 382A away from portion 382B so that any movement of seal 338 out of cavity 291 is resisted. The seal is thereby retained in cavity 291 because of the friction that develops between one or more of winged portions against the walls 292 depending on the orientation of distal end 382 in cavity 291. In all other aspects, seal 338 is the same as described in the first embodiment.

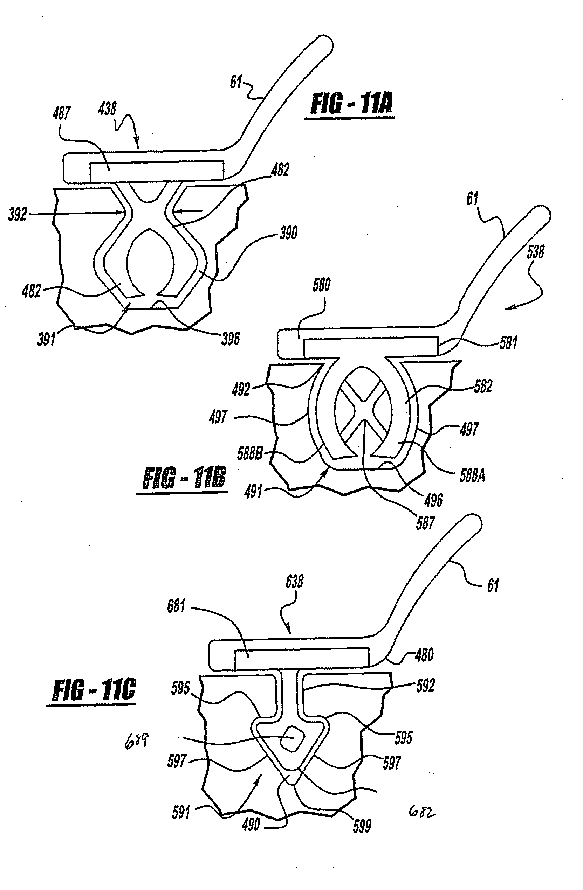

Another illustration of an embodiment of the compression / expansion retention type for the lip seal is designated by the numeral 438 as shown in FIG. 11A. Lip seal 438 has a sealing lip 61 and a distal end with a projection 482. Projection 482 is "X-shaped" with one void between each of the two bottom legs and a second void near cap portion 481. Projection 482 is inserted into channel 390. Cavity 391 of channel 390, is similar to cavity 291 except that bottom surface 396 does not have projection 299. As projection 482 is inserted into cavity 391, each leg of projection 482 is collapsed to a compressed width that is less than opening width 392 to permit passage of each leg into cavity 391. As the seal is pushed further into cavity 391, each leg expands laterally toward the walls of the cavity. With further insertion, each leg projection expands laterally to fit into cavity 391 where the distal end projection 482 and a portion of each leg is captured through the opening 392. In all other aspects seal 438 operates as in the first embodiment.

In FIG. 11B still another illustrated of an embodiment of the compression / expansion type of the lips seal is shown and is designated by the numeral 538. Lip seal 538 has a sealing lip 61 and a base segment 580, a cap 581 and a distal end 582 with a projection of the compression / expansion retention type. Each leg of projection 582 has a C-shaped profile with the open end oriented away from cap portion 581. Projection 582 has a two segments 588A and 588B. Segment 588A is a mirror image of 588B. In between segment 588A and 588B is a compressible / expandable cross ― brace segment 587 which is "X-shaped" with voids between cross brace segments 588A and 588B, respectively. As projection 582 is inserted into cavity 491, each segment 588A and 588B respectively is collapsed toward one another to a compressed width that is less then the opening width of opening 492. As the seal continues to be inserted into cavity 491, each segment 588A and 588B respectively expands toward each respective wall 497. Each wall is formed between opening 492 and bottom surface 496. Optionally, bottom surface 491 may have a projection and an apex. Lip seal 538 resists movement out of cavity 491 because of friction that develops between 588A and 588B and at least one of the walls 497. In all other aspects, seal 538 is the same as described in the first embodiment.

Still yet another embodiment of the compression / expansion type lip seal is illustrated in FIG. 11C and is designated by the numeral 638. Seal lip 638 has a lip seal 61 and base segment 480. Base segment 480 has a cap portion 681 and a free distal end or projection 682. Free distal end is illustrated as a tear drop shape with an internal cavity 689 that is vented to permit projection 682 to collapse on itself when compressed. In its uncompressed or expanded condition, projection 682 has a generally tear drop shaped body with two wings projecting from each side of the body. Projection 682 is inserted into a similar shaped cavity. Cavity has an opening 592 with an opening width 593. Top surface 595 of cavity 591 has a pair of walls 597 that extend from top surface 595 to bottom 599. To insert base segment into the cavity, projection 682 is collapsed to permit projection 682 to pass through opening width 598 until cap portion 681 is adjacent to channel 490. Once a portion of distal end is past opening 592, that portion seeks to return to its uncompressed condition . In one condition, when fully inserted into cavity, projection may be uncompressed because cavity is slightly larger then projection . Optionally in another condition, it is within the scope of the invention that projection is expanded but compressed in cavity 591. In it's expanded condition, projection 682 resists movement of lip seal 638 out of cavity 591 by virtue of the friction forces that develop between the two wings projecting from the tear drop shaped body and the top surface 595 and the friction forces between the tear drop shaped body and the walls 597. In all other aspects, lip seal 638 operates as described in the first embodiment.

In FIG. 11D, still yet another embodiment of the compression / expansion type lip seal is illustrated and is designated by the numeral 738. Seal 738 has a sealing lip 61 and base segment 580. Base segment 580 has a cap portion 581 and a free distal end or projection 582 with two legs. When free distal end 582 is uncompressed, it has an oval shape with a bottom portion and an internal cavity that is vented into cavity 691 to permit projection 582 to collapse on itself when compressed. Projection 582 is inserted into channel 90 through a necked down opening 692 before opening into cavity 691. Projection 582 is inserted into a substantially same sized cavity or larger sized cavity formed to accept the distal end. Once past the opening, the internal support structure in projection 582 expands from its compressed condition . In its expanded condition, projection 582 resists movement out of cavity because of friction forces, which develop between the walls 697 and projection 582. In all other aspects lip seal 738, is as described in the first embodiment.

Still yet another embodiment of the compression / expansion type lip seal is illustrated in FIG. 11E and is designated by the numeral 838. Seal 838 has a sealing lip 61 and a base segment 680. Base segment 680 has a free distal end 692 that is similar to 382 described earlier except that instead of having an "X-shaped" internal support structure, segment 680 has an inverted T-shaped internal support structure. The horizontal portion of the inverted T-shaped structure acts to separate the legs 692 from each other when in an uncompressed condition. In all other aspects, seal 838 is as described in seal 738.

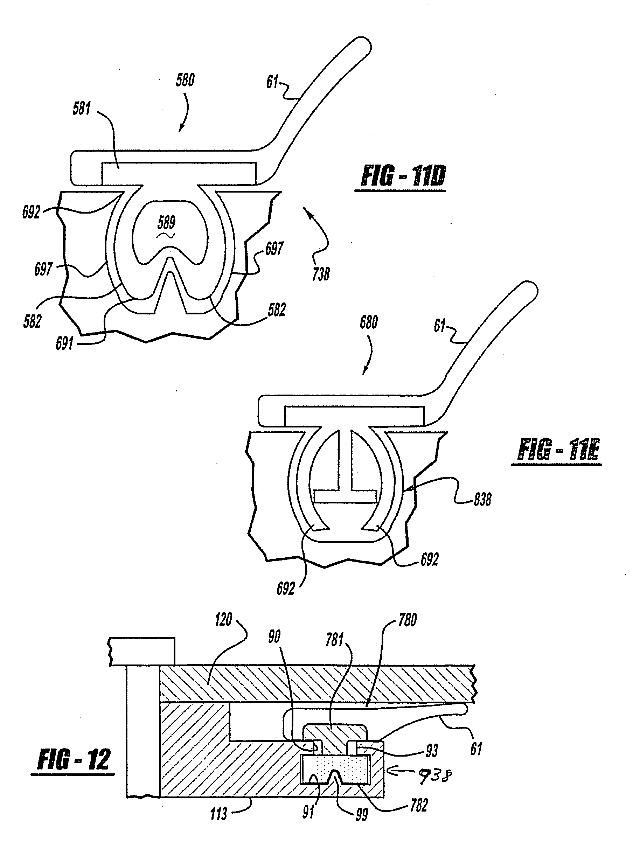

FIG. 12 is yet still another embodiment of the compression / expansion type lip seal as used in an internal engine application to keep fluid from leaking out of the engine and is designated by the numeral 938. The seal 938 is used to seal an gap 139 formed in the housing 113 and enclosed by a cover 120. Seal 938 is inserted into channel 90 in housing or member 113. Channel 90 has a cavity 91 as described previously. Seal 938 has a sealing lip 61 and a base segment 780. Base segment 780 has a cap portion 781 and a free distal end or projection 782. Projection 782 has a shape that is generally the same as cavity 91. Projection 782 is made of a micro cellular material, that is a polymeric material with numerous voids formed therein so as to form a foamed body described in US Patent No. 6,471,179 which issued on October 29, 2002 and which disclosure is incorporated herein by its entirety. Initially, projection 782 is larger then opening width 93. When a compression force is exerted on the foamed body, the body is compressed to a width that is smaller than opening width 93 and permits projection 782 to be inserted in cavity 91. Once projection 782 is past opening 93, the body expands and resists movement out of cavity 91 because of friction forces, which develop between the top surface of cavity 91 and projection 782. The friction force resists removal of projection 792 of cavity 91 and includes compressing the body through the opening width 93. Optionally, cavity 91 has a projection 98 with an apex 99 to put compressive force on projection 782 to increase the frictional force to resist pulling out of cavity 91. The encapsulating cover 120 is secured to housing 113 by conventional fasteners. In all other aspects seal 938 is as described in the first embodiment.

In view of the foregoing disclosures, those who are skilled in this area of technology, will recognize that various modifications and embodiments can be made to the embodiments described herein, without departing from the true scope and spirit of the present invention. All such alternative embodiments are intended to be covered by the following claims.

## Claims

1. A seal for closure of a gap between a support member and an adjacent second member, the seal comprising, in combination:
a body formed of a polymeric material, the body including a sealing segment and a base segment, the sealing segment forming a laterally and axially extending sealing lip to slidingly engage the second member, the base segment having a free distal end, the free distal end having one of a compressible portion and an articulating joint portion; and
a channel formed in the support member, the channel having a portion forming a cavity and an opening in communication with the cavity, the cavity having a cavity width, the cavity width being greater than the width of the opening;
wherein one of the compressible portion and the articulating joint portion being collapsible to a first width less than the opening width to permit insertion of the free distal end past the opening and into the cavity and being expandable in the cavity to a second width greater than the first width to inhibit the removal of the distal end from the cavity.

2. A seal as claimed in claim 1, wherein the sealing segment includes a laterally and axially extending second sealing lip.

3. A seal claimed in claim 1, wherein the sealing segment has a portion with a layer of flock material.

4. A seal as claimed in claim 1, wherein the seal segment has a portion with a layer of polycoat material.

5. A seal as claimed in claim 1, wherein the seal segment is made of one hardness material and the base segment is made of another hardness material.

6. A seal as claimed in claim 1, wherein the cavity width being greater than the second width.

7. A seal as claimed in claim 1, wherein the free distal end engages a portion of the interior wall of the cavity.

8. A seal as claimed in claim 5, wherein the one hardness material is less than the another hardness material.

9. A seal as claimed in claim 2, wherein the seal is formed into a frame shape.

10. A flexible seal of closure of a gap between two adjacent but spaced apart members, the seal comprising, in combination:
an elongate body having a seal segment and a base segment, the seal segment having a cantilevered sealing surface extending laterally and axially from the base segment, to sealingly close the gap, the base segment having a free distal end including one of a compressible segment and an articulating joint portion; and
a support member engaging in the free distal end, the support member having a portion forming channel including an elongated aperture, the aperture having an opening width and a cavity in communication with the opening, the cavity having a cavity width, a bottom portion, a top portion adjacent the opening and a surface connecting the top portion and the bottom portion, the cavity width being larger then the opening width;
wherein one of the compressible segment and of the articulating joint portion in one condition being compressible to a width less than the opening width to permit insertion of the free distal end into the cavity and in another condition the free distal end being expandable to contact one of the surface and the top portion to inhibit the removal of the distal end from the cavity.

11. A seal as claimed in claim 10, wherein the free distal end is made of a material consisting of a thermoset, a thermoplastic and a plastomer.

12. A seal as claimed in claim 10, wherein the free distal end is bonded to the surface of the cavity by an adhesive .

13. A seal as claimed in claim 10, wherein the seal segment is formed from a polymeric material including one of a thermoplastic elastomer, a thermoplastic vulcanizate, thermoplastic olefin, a plastomer, and a thermoset elastomer.

14. A seal as claimed in claim 12, wherein the adhesive is selected from one of a one part adhesive and a two part adhesive.

15. A method of sealing a gap between a support member and a second adjacent but spaced apart member with a flexible seal comprising:
providing a body formed of a polymeric material, the body including a seal segment and a base segment, the seal segment forming cantilevered surface that sealingly engages the second member, the base segment extending from the seal segment and being attachable to the support member, the base segment having free distal end including one of a collapsible segment and an articulating segment, the free distal end having an uncompressed width in one condition and a compressed width in another condition;
providing the support member with a portion forming a channel including a cavity and an opening in communication with the cavity, the opening having an opening width, the cavity having a cavity width and a surface, the opening width being smaller then the cavity width;
squeezing one of the compressible segment and the articulating segment to a compressed width that is smaller than the opening width; and
inserting the compressed width through the opening into the cavity, the compressed width expanding in the cavity to a width that engages a portion of the inner surface of the cavity to inhibit removal of the distal end from the cavity.

16. The method as claimed in claim 15, further comprising:
bonding the free distal end to the surface of the cavity.

17. The method as claimed in claim 15, wherein the seal segment is formed of a material with one hardness and the base segment is formed of a material with a second hardness.

18. The method as claimed in claim 15, wherein the seal segment includes a first seal and a second seal adjacent but spaced away from the first seal.

19. The method as claimed in claim 15, wherein the seal segment sealingly engages the second member absent any substantial compression of the sealing surface.

20. A seal for closure of a gap between a support member and an adjacent second member, the seal comprising in combination:
a body formed of a polymeric material, the body including a sealing segment and a base segment, the sealing segment forming a lip to sealingly engage the second member, the base segment having a free distal end;
a channel formed in the support member, the channel having a portion forming a cavity and an opening in communication with the cavity, the cavity having a cavity width, the cavity width being greater than the width of the opening; and
the free distal end being one of means for articulating the distal end and means for compressing the distal end to a first width less than the opening width wherein after insertion of the free distal end past the opening and into the cavity, the distal end being expandable in the cavity to a second width greater than the first width to inhibit the removal of the distal end from the cavity.
